# EUROPÄISCHE PATENTSCHRIFT

(11) **EP 1 367 267 B1**
(45) Veröffentlichungstag und Bekanntmachung des Hinweises auf die Patenterteilung: **29.11.2006**
(21) Anmeldenummer: 03405327.2
(22) Anmeldetag: 12.05.2003
(51) Int. Cl.: F16B 13/14

(54) **Hülsenförmiges Dübelelement**
Sleeve-shaped dowel element
Douille sous forme de manchon

(30) Priorität: 23.05.2002 DE 10222799
(43) Veröffentlichungstag der Anmeldung: 03.12.2003
(73) Patentinhaber: HILTI Aktiengesellschaft, 9494 Schaan (LI)
(72) Erfinder: Ayrle, Thomas, 86830 Schwabmünchen (DE); Ginter, Herbert, 87600 Kaufbeuren (DE); Merz, Michael, 9472 Grabs (CH)
(74) Vertreter: Wildi, Roland

(56) Entgegenhaltungen:
- DE-A- 3 535 251
- DE-A- 3 812 913
- DE-A- 4 004 207

## Beschreibung

### Technisches Gebiet

Die Erfindung betrifft ein hülsenförmiges Dübelelement mit einem Endbereich, einer Einsteckseite und einem Hohlraum zur Aufnahme der Komponenten einer aushärtenden, der Verankerung eines Befestigungselementes dienenden Masse, wobei mehrere Dübelelemente zu einem Dübelkörper verbindbar sind.

### Stand der Technik

Bei Renovations- und Sanierungsarbeiten an älteren Bauten sind sehr oft Befestigungen in nicht genau definierbaren Aufnahmematerialien erforderlich. Diese Aufnahmematerialien können aus Voll- oder Hohlsteinen, mehrschichtigen Fassaden oder Risse und Hohlräume aufweisenden Untergründen bestehen. Mechanisch verankerbare Befestigungselemente können nur bedingt in solchen Aufnahmematerialien verankert werden, da der erforderliche Verankerungswert oft nicht erreicht wird.

Zur Erstellung von chemischen Befestigungen, z. B. mittels sogenannten Klebe- bzw. Verbundankern, werden diese üblicherweise mit 2K-Kunstharzmörtel, Siebhülse und Befestigungselement erstellt. Die Siebhülse verhindert einerseits das Abtropfen des in das Bohrloch eingebrachten Mörtels in einen Hohlraum, der z. B. in einem Hohlziegel vorhanden ist. Andererseits bestimmen die Öffnungen in der Siebhülse die Form und Verteilung des aus der Siebhülse austretenden Mörtels, was entscheidend die Qualität der Befestigung beeinflusst.

Die Siebhülsen werden normalerweise in bestimmten Standardlängen bereitgestellt. Werden andere, vor allem längere Einbindetiefen benötigt, muss auf Siebhülsenmeterware zurückgegriffen werden, die der Anwender nach Bedarf ablängt und an einem Ende verschliesst, was einen beträchtlichen, zeitlichen Aufwand darstellt und Anwendungsrisiken beinhaltet. Weiter muss bei den bekannten Siebhülsen das Befestigungselement in seiner Länge exakt auf die Befestigung abgestimmt werden, was den Einsatz von standardisierten Befestigungselementen auf wenige Anwendungen einschränkt.

Zusätzlich weisen die bekannten Siebhülsen zumeist einen fest an der Einsteckseite der Siebhülse angeordneten Kragen auf, der ein unabsichtliches Hineinrutschen der Siebhülse beim Setzen in das Bohrloch verhindert. Gleichzeitig können mit Kragen versehene Siebhülsen bei Bedarf nicht tiefer in das Bohrloch gesetzt werden, ohne dass der Kragen entfernt wurde.

Die DE 35 35 251 A1 zeigt beispielsweise einen hülsenförmigen Dübelkörper, der aus mehreren Schafthülsen besteht, die zur gewünschten Länge des Dübelkörpers zusammengesteckt werden können. Die Verbindung zweier Schafthülsen wird über ineinandergreifende Ringwülste oder in Form eines Bajonettverschlusses geschaffen. Des Weiteren kann ein Kupplungsring zwei Schafthülsen miteinander verbinden.

Nachteilig an den bekannten Lösungen ist, dass der Anwender entweder nur Standardlösungen oder zeitaufwändige Lösungen anwenden kann, wenn er individuelle chemische Befestigungen ausführen möchte. Ferner kann bei einem Dübelkörper gemäss der DE 35 35 251 A1 ein in den Dübelkörper eingeführtes Befestigungselement nur bedingt ausgerichtet werden, was insbesondere bei grossen Einbindetiefen des Dübelkörpers die Qualität der Befestigung negativ beeinträchtigt. Des Weiteren muss der Anwender mehrere verschiedene Siebhülsenausführungen mitführen, um einen Dübelkörper formen zu können.

### Darstellung der Erfindung

Der vorliegenden Erfindung liegt die Aufgabe zugrunde, ein flexibel einsetzbares, hülsenförmiges Dübelelement zu schaffen, mit dem verschiedene Einbindetiefen des Dübelelements aus standardisierten Siebhülsen einfachst geschaffen werden können und ein in das Dübelelement eingesetztes Befestigungselement ausgerichtet positionierbar ist.

Die Aufgabe ist durch die Merkmale des Anspruchs 1 gelöst. Gemäss der Erfindung weist ein hülsenförmiges Dübelelement einen Endbereich, eine Einsteckseite und einem Hohlraum zur Aufnahme der Komponenten einer aushärtenden, der Verankerung eines Befestigungselementes dienenden Masse auf, wobei mehrere Dübelelemente zu einem Dübelkörper verbindbar sind. An dem Endbereich sind federelastisch beaufschlagte, in Richtung der Dübelelementachse vorbelastete Zentrierelemente angeordnet, um ein Befestigungselement an mehreren Bereichen entlang der Einbindetiefe des Dübelkörpers zu zentrieren. Am Hülsenmantel im Bereich des Hohlraums sind Öffnungen für einen Mörtelaustritt vorgesehen.

Mit dem erfindungsgemässen Dübelelement können verschiedene Einbindetiefen bei optimaler Zentrierung des Befestigungselementes realisiert werden. Jedes der Dübelelemente ist einzeln sowie auch in Kombination mit anderen Dübelelementen einsetzbar. Entsprechend den Bedürfnissen des Anwenders kann ein Dübelelement verwendet werden oder mehrere der standardisierten Dübelelementen zu einem Dübelkörper verbunden werden.

Das erfindungsgemässe Dübelelement weist bevorzugt an seinem Endbereich keinen festen Boden auf, sondern federelastische, in Richtung der Dübelelementachse angeordnete Zentrierelemente. Somit ist mit einer Mischerspitze und/oder mit dem Befestigungselement der Endbereich jedes Dübelelements ohne zusätzliche Hilfsmittel durchdringbar. Die Zentrierelemente können beispielsweise mittels, vorzugsweise leicht dehnbarer, Stege miteinander verbunden sein. Zusätzlich ist mit den am Endbereich angeordneten Zentrierelementen bei jedem der miteinander verbundenen Dübelelemente die Zentrierung des Befestigungselements beim Setzen auch bei grossen Einbindetiefen der Befestigung gewährleistet.

Vorzugsweise sind die Zentrierelemente als lamellenartige Zungen ausgestaltet. Durch diese Ausgestaltung der Zentrierelemente ist die gewünschte federelastische Beaufschlagung quer zur Richtung der Dübelachse und die dadurch vorhandene, in Richtung der Dübelachse wirkende Vorbelastung in der gewünschten Weise realisierbar. Dadurch kann das Befestigungselement, die Mischerspitze sowie auch die eingepresste Masse den Endbereich der einzelnen Dübelelemente durchdringen, da sich das Zentrierelement vorzugsweise radial zur Dübelachse öffnen kann. Als Variante dazu kann der Endbereich der Dübelelemente in der Art einer durchdringbaren Membrane verschlossen sein. Eine weitere Möglichkeit für einen Endbereichabschluss der Dübelelemente stellt eine konusförmige Ausbildung mit einer Öffnung dar, wobei die Öffnung in ihrem Durchmesser aufweitbar ist. Die Öffnung ist vorzugsweise auf die Eigenschaften des eingebrachten Mörtels abgestimmt.

Bevorzugt sind die Zentrierelemente am Umfang des Endbereichs des Dübelelements angeordnet. Obwohl die Zentrierelemente vorzugsweise gleichmässig am Umfang des Endbereichs des Dübelelements angeordnet sind, können diese auch unsymmetrisch entlang des Umfangs des Endbereichs angeordnet und ausgebildet werden. Mit einer solchen Anordnung der Zentrierelemente ist eine optimale Zentrierung des Befestigungselements beim Setzen von diesem in dem oder den Dübelkörpern gegeben.

Vorteilhafterweise weisen die Zentrierelemente in Ausströmrichtung der Masse einen weiteren Federweg als der Federweg in Rückflussrichtung der Masse auf. Damit ist eine gegenseitige Blockade der Zentrierelemente in Rückflussrichtung der eingepressten Masse gegeben. Beim Einpressen der Komponentenmasse beziehungsweise des Mörtels und beim Setzen des Befestigungselements drängt die eingepresste Masse in Richtung des Dübelkörpereingangs. Mit dem erfindungsgemässen Dübelelement kann die eingepresste Masse höchstens bis zu einem Endbereich der Dübelelemente des aus mehreren Dübelelementen zusammengesetzten Dübelkörpers drängen. D. h., die eingepresste Masse wird an den Endbereichen der Dübelelemente gehindert in Richtung des Dübelkörpereingangs zu strömen. Damit kann die eingepresste Masse in bevorzugter Art und Weise über die ganze Länge der Dübelelemente durch die Öffnungen in den Dübelelementen in die umgebenden Hohlräume austreten und gewährleistet eine hohe Qualität der Befestigung, wenn das Befestigungselement in den Dübelkörper gesetzt wird. Ein Herausfliessen der eingepressten Masse aus dem Dübelkörpereingang ist weitgehend verhindert, da sich die Zentrierelemente in Rücklaufrichtung des Mörtels gegenseitig abstützen können und die Hülsenöffnung versperren.

Vorzugsweise weist das Dübelelement an seinem Endbereich ein oder mehrere Rastelemente und an seiner gegenüberliegenden Einsteckseite mit diesen Rastelementen in Eingriff bringbare Gegenrastelemente auf. Mit den Rastelementen und mit diesen zusammenwirkenden Gegenrastelementen sind die einzelnen Dübelelemente sicher zu einem Dübelkörper verbindbar. Insbesondere bei Dübelkörpern, die aus einer Mehrzahl von Dübelelementen zusammengesetzt sind, ist eine solche Verbindung zur Gewährleistung der Gebrauchstauglichkeit des Dübelkörpers vorteilhaft.

Die Rastelemente sind beispielsweise im Wesentlichen hakenförmig ausgebildet. D. h., sie weisen in Einsteckrichtung des Dübelelements eine, entgegen der Einsteckrichtung ansteigende Fläche auf, die z. B. abrupt zur Aussenfläche des Dübelelements hin abfällt. Die Gegenrastelemente sind, bei einer solchen Ausführungsform der Rastelemente, vorzugsweise als Öffnungen ausgebildet, deren Abmessungen auf die Rastelemente abgestimmt sind, so dass diese beiden Elemente zusammenwirken können. In einer Variante dazu sind die Rastelemente als Nocken und die Gegenrastelemente als mit diesen Nocken zusammenwirkende Vertiefungen ausgebildet. Es sind weitere Ausbildungen der Rast- und Gegenrastelemente denkbar, wobei im Wesentlichen die Einfachheit der Zusammensteckbarkeit und die Sicherheit der Verbindung zwischen den einzelnen Dübelelementen und somit die Gebrauchstauglichkeit des gesamten Dübelkörpers im Vordergrund steht. In einer weiteren Ausführungsform sind die Rastelemente und die mit diesen zusammenwirkenden Gegenrastelementen als eine lösbare Verbindung zwischen zwei Dübelelementen ausgebildet, womit versehentlich verbundene Dübelelemente wieder voneinander gelöst werden können.

Vorteilhafterweise ist an der Einsteckseite des Dübelelements ein Kragenelement anbringbar, das an der Einsteckseite des aus mehreren Dübelelementen zusammengesetzten Dübelkörpers angeordnet wird. Das Kragenelement weist einen, über den äusseren Umfang des Dübelelementes, vorstehenden Kragen auf, der als Setzhilfe, beziehungsweise als Setzanschlag für den Dübelkörper dient und ein unabsichtliches Hineinrutschen des Dübelkörpers in das Bohrloch beim Setzvorgang verhindert. Weiter dient das Kragenelement als Mörtelauslaufsperre.

Bevorzugt sind an diesem Kragenelement federelastisch beaufschlagte, in Richtung der Dübelelementachse vorbelastete Zentrierelemente angeordnet. Die Zentrierelemente sind federelastisch beweglich und verhindern, wie die Zentrierelemente am Endbereich der Dübelelemente, ein Rückfluss der in den Dübelkörper eingepressten Masse. Die Zentrierelemente dienen gleichzeitig als Führungshilfe für ein Befestigungselement, das in den Dübelkörper eingesetzt wird.

Das Kragenelement ist nicht fest mit der Einsteckseite des Dübelelements verbunden, sondern wird bei Bedarf und nur an dem Dübelelement an der Einsteckseite des gesamten Dübelkörpers aufgesteckt. Idealerweise ist das Kragenelement, z. B. mittels einem Faden bzw. einer stegähnlichen Verbindung, mit dem Dübelelement leicht lösbar verbunden und kann vom Dübelelement entfernt werden, wenn an diesem Dübelelement kein Kragenelement angeordnet werden soll. In einer Variante dazu ist das Kragenelement ein separates Einzelteil, das lose zum Dübelelement verfügbar ist.

Vorzugsweise sind die Zentrierelemente des Kragenelements als lamellenartige Zungen ausgestaltet. Durch diese Ausgestaltung der Zentrierelemente ist die gewünschte federelastische Beaufschlagung quer zur Richtung der Dübelachse und die dadurch vorhandene, in Richtung der Dübelachse wirkende Vorbelastung in der gewünschten Weise realisierbar. Das Befestigungselement, die Mischerspitze sowie auch die eingepresste Masse können das Kragenelement durchdringen. Als Variante kann das Kragenelement in der Art einer durchdringbaren Membrane verschlossen sein. Eine weitere Möglichkeit für ein Kragenelement stellt eine konusförmige Ausbildung mit einer Öffnung dar, wobei die Öffnung aufweitbar ist und im Wesentlichen in der Art eines Ringmuskels wirkt.

Weiter sind die Zentrierelemente des Kragenelements in einer weiteren bevorzugten Ausführungsform gleichmässig am Umfang der Einsteckseite des Dübelelements angeordnet. Damit ist eine optimale Zentrierung des Befestigungselements bereits zu Beginn des Setzvorgangs des Befestigungselements gegeben.

Vorteilhafterweise weist das Kragenelement an seinem Umfang, mit den an der Einsteckseite des Dübelelements angeordneten Gegenrastelementen in Eingriff bringbare, Rastelemente auf. Die Rastelemente sind vorzugsweise analog den Rastelementen am Endbereich der Dübelelemente ausgebildet, was eine vorteilhafte Kombinierbarkeit der einzelnen Elemente des Dübelkörpers ermöglicht.

Vorzugsweise sind die Dübelelemente und/oder das Kragenelement aus einem Kunststoffmaterial gefertigt, beispielsweise in einem Spritzgussverfahren. Des Weiteren kann zur Fertigung der Dübelkörperelemente beziehungsweise zumindest einem Teil der Dübelkörperelemente z. B. ein Drahtgewebe, Streckmetall, Kunst- oder Naturstoffnetz oder ein elastischer Gewebestrumpf verwendet werden. Beim Gewebestrumpf tritt der eingepresste Mörtel nicht aus, sondern das Gewebe dehnt sich lediglich in die Hohlräume aus, beispielsweise in die Hohlräume eines Hohlziegels. Zur Fertigung eignen sich die Materialien, die einen gezielten Austritt der Mörtelmasse in die Hohlräume ermöglichen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: eine Seitenansicht eines erfindungsgemässen Dübelelements;
- Fig. 2a: eine Seitenansicht eines Kragenelements;
- Fig. 2b: eine Vorderansicht auf das Kragenelement, gesehen aus der Richtung IIb auf die Fig. 2a;
- Fig. 3: eine Seitenansicht eines Dübelkörpers; und

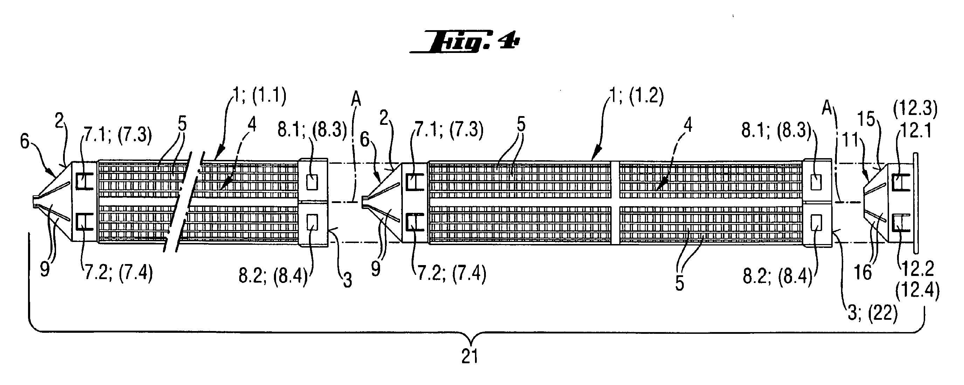

- Fig. 4: eine der Fig. 3 entsprechenden Seitenansicht in Explosionsdarstellung der Elemente des Dübelkörpers vor deren Vereinigungsmontage.

Grundsätzlich sind in den Figuren gleiche Teile mit den gleichen Bezugszeichen versehen.

### Wege zur Ausführung der Erfindung

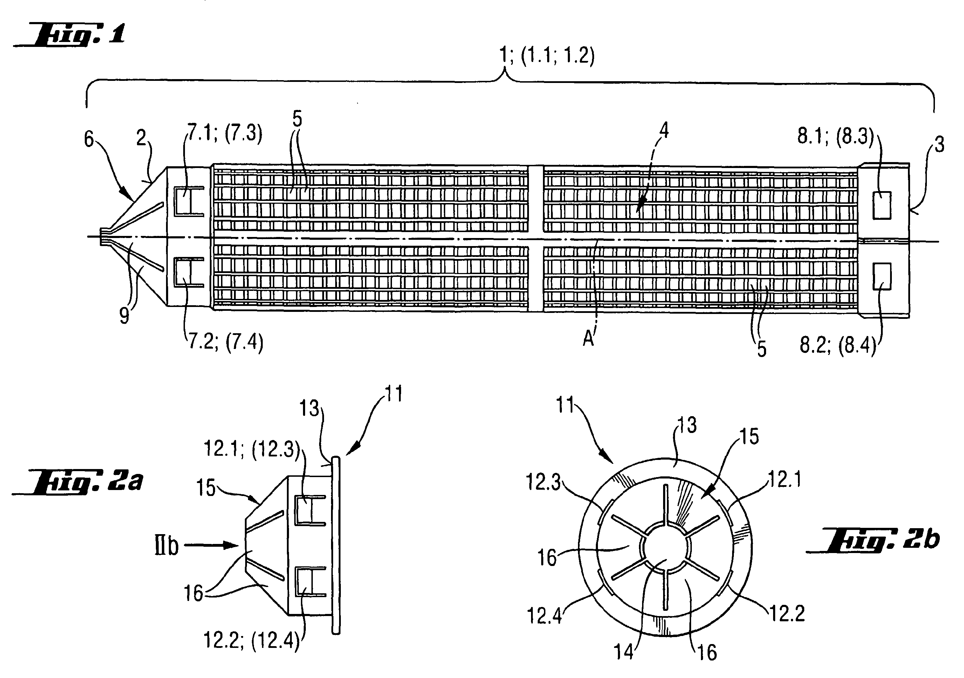

Fig. 1 zeigt eine Seitenansicht eines erfindungsgemässen Dübelelements. Das Dübelelement 1 weist einen Endbereich 2, eine Einsteckseite 3 und einen Hohlraum 4 zur Aufnahme der, der Verankerung eines Befestigungselements (hier nicht dargestellt) dienenden, Masse auf. Am Umfang des Dübelelements 1 sind im Bereich des Hohlraums 4 Öffnungen 5 vorgesehen, durch welche die verdrängte Masse in der gewünschten Form und Verteilung aus dem Dübelelement 1 austreten kann.

Am Endbereich 2 sind lamellenartige Zungen 9 ausgestaltet, die sich federelastisch radial, also quer zur Richtung der Dübelelementachse A öffnen können und welche das Zentrierelement 6 bilden. Am äusseren umfangseitigen Bereich des Endbereichs 2 sind vier Rastelemente 7.1, 7.2 (die beiden anderen Rastelemente 7.3, 7.4 sind in dieser Darstellung verdeckt und nicht ersichtlich) angeordnet, welche im Wesentlichen hakenförmig ausgebildet sind. Die Rastelemente 7.1 bis 7.4 sind in diesem Ausführungsbeispiel ungleichmässig am äusseren Umfang im Bereich des Endbereichs 2 vorgesehen, können aber auch gleichmässig am äusseren Umfang angeordnet sein.

An der Einsteckseite 3 sind vier Öffnungen 8.1, 8.2 vorgesehen (die beiden anderen Öffnungen 8.3, 8.4 sind in dieser Darstellung verdeckt und nicht ersichtlich), die als Gegenrastelemente für die Rastelemente 7.1 bis 7.4 dienen. Die Öffnungen 8.1 bis 8.4 sind in diesem Ausführungsbeispiel ungleichmässig am äusseren Umfang im Bereich der Einsteckseite 3 vorgesehen, können aber wie die Rastelemente 7.1 bis 7.4 gleichmässig am äusseren Umfang angeordnet sein. Die Öffnungen 8.1 bis 8.4 können auf dem Umfang des Dübelelements 1 gegenüber den Rastelementen 7.1 bis 7.4 um einen Winkel, beispielsweise um einen Winkel von 45°, versetzt zueinander angeordnet sein. Damit würden die Verbindungen mehrerer miteinander verbundener Dübelelemente nicht auf einer parallel zur Dübelelementachse A liegenden Linie liegen, was sich positiv auf die Stabilität eines aus mehreren Dübelelementen 1.1, 1.2 zusammengesetzten Dübelkörpers 21 auswirkt.

Eine Seitenansicht und eine Vorderansicht auf ein Kragenelement ist in Fig. 2a und Fig. 2b dargestellt. Das Kragenelement 11 weist vier, mit den in Fig. 1 dargestellten und beschriebenen Öffnungen 8.1 bis 8.4 zusammenwirkbare Rastelemente 12.1 bis 12.4 auf. Des Weiteren ist an dem Kragenelement 11 ein Kragen 13 ausgebildet, der als Anschlag beim Setzen des nachfolgend noch beschriebenen Dübelkörpers 21 dient. Im Zentrum des Kragenelements 13 ist die Durchdringung 14 vorgesehen, die von den lamellenartigen Zungen 15 umgeben ist, die federelastisch beaufschlagt und im, an dem Dübelelement angeordneten Zustand in Richtung der Dübelelementachse A vorbelastet sind.

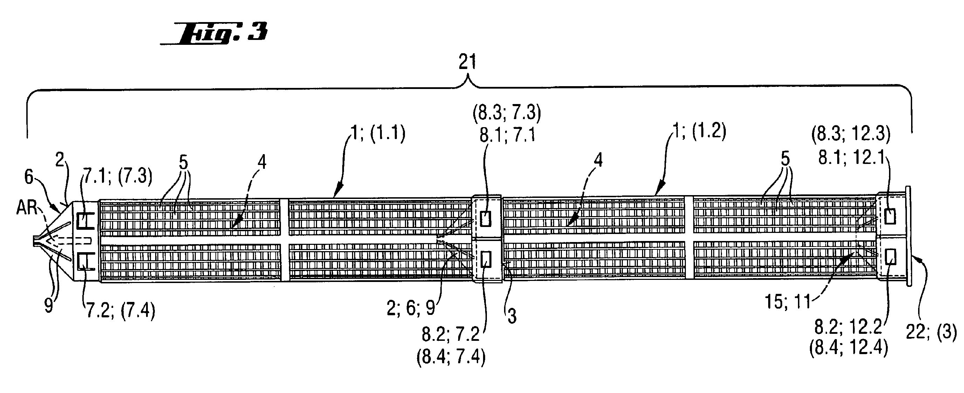

In Fig. 3 ist eine Seitenansicht eines Dübelkörpers 21 gezeigt. Der Dübelkörper 21 ist aus zwei Dübelelementen 1.1, 1.2 zusammengesetzt. An der Einsteckseite 22 des Dübelkörpers 21 ist ein Kragenelement 11 eingesteckt und verrastet.

Der Dübelkörper 21 wird in ein nicht dargestelltes Bohrloch bis zum Anschlag des Kragenelements 11 an den Bohrlochrand eingeführt. Anschliessend wird eine vorbestimmte Menge eines zumeist aus mehreren Komponenten zusammengesetzten, aushärtenden, der Verankerung des Befestigungselements dienenden Mörtels etappenweise in Richtung AR in den Dübelkörper 21 eingepresst. Durch die am Endbereich 2 des Dübelelements 1.2 angeordneten vorbelasteten Zungen 9 und die am Kragenelement 11 angeordneten Zungen 16 ist ein unerwünschtes Rückfliessen entgegen der Richtung AR des eingepressten Mörtels verhindert. In einem weiteren Schritt wird das Befestigungsmittel, z. B. eine Gewindestange, in den Dübelkörper 21 eingeführt und mittels der Zungen 9 am Endbereich 2 des Dübelelements 1.2 und den Zungen 16 am Kragenelement 11 geführt, wodurch der im Dübelkörper 21 vorhandene Mörtel aus den am Umfang der Dübelelemente 1.1, 1.2 vorhandenen Öffnungen 5 in gewünschter Form und Verteilung austritt. Die Zungen 16 des Kragenelements 11 und die Zungen 9 an den Endbereichen 2 der Dübelkörper 21 (1.1, 1.2, ...), die von dem Befestigungselement durchdrungen werden, legen sich an dem Befestigungselement an und zentrieren das Befestigungselement an mehreren Bereichen entlang der Einbindetiefe des Dübelkörpers 21.

Zusammenfassend ist festzustellen, dass mit der vorliegenden Erfindung ein universell einsetzbarer Dübelkörper geschaffen wurde, mit dem beliebige Einbindetiefen aus zwei oder mehreren standardisierten Einzelteilen (hülsenförmiges Dübelelement und Kragenelement) möglich sind, wobei die Führung eines in den Dübelkörper eingesetzten Befestigungselements auch bei grossen Einbindetiefen der Befestigung gewährleistet ist.

## Patentansprüche

1. Hülsenförmiges Dübelelement mit einem Endbereich (2), einer Einsteckseite (3) und einem Hohlraum (4) zur Aufnahme der Komponenten einer aushärtenden, der Verankerung eines Befestigungselementes dienenden Masse, wobei mehrere Dübelelemente (1) zu einem Dübelkörper (21) verbindbar sind, **dadurch gekennzeichnet, dass** an dem Endbereich (2) federelastisch beaufschlagte, in Richtung der Dübelelementachse (A) vorbelastete Zentrierelemente (6) angeordnet sind, um ein Befestigungselement an mehreren Bereichen entlang der Einbindetiefe des Dübelkörpers zu zentrieren.

2. Dübelelement nach Anspruch 1, **dadurch gekennzeichnet, dass** die Zentrierelemente (6) als lamellenartige Zungen (9) ausgestaltet sind.

3. Dübelelement nach Anspruch 1 oder 2, **dadurch gekennzeichnet, dass** die Zentrierelemente (6) am Umfang des Endbereichs (2) des Dübelelements (1) angeordnet sind.

4. Dübelelement nach einem der Ansprüche 1 bis 3, **dadurch gekennzeichnet, dass** die Zentrierelemente (6) in Ausströmrichtung (AR) der Masse einen weiteren Federweg als der Federweg in Rückflussrichtung der Masse aufweisen zur gegenseitigen Blockade der Zentrierelemente (6) in Rückflussrichtung der Masse.

5. Dübelelement nach einem der Ansprüche 1 bis 4, **dadurch gekennzeichnet, dass** das Dübelelement (1) an seinem Endbereich (2) Rastelemente (7.1, 7.2, 7.3, 7.4) und an seiner gegenüberliegenden Einsteckseite (3) mit diesen Rastelementen (7.1, 7.2, 7.3, 7.4) in Eingriff bringbare Gegenrastelemente (8.1, 8.2, 8.3, 8.4) aufweist.

6. Dübelelement nach einem der Ansprüche 1 bis 5, **dadurch gekennzeichnet, dass** an der Einsteckseite (3) des Dübelelements (1) ein Kragenelement (11) anbringbar ist, wobei an diesem Kragenelement (11) federelastisch beaufschlagte, in Richtung der Dübelelementachse (A) vorbelastete Zentrierelemente (15) angeordnet sind.

7. Dübelelement nach Anspruch 6, **dadurch gekennzeichnet, dass** die Zentrierelemente (15) des Kragenelements (11) als lamellenartige Zungen ausgestaltet und optional gleichmässig am Umfang des Kragenelements (11) angeordnet sind.

8. Dübelelement nach Anspruch 6 oder 7, **dadurch gekennzeichnet, dass** das Kragenelement (11) an dessen Umfang mit den an der Einsteckseite (3) des Dübelelements (1) angeordneten Gegenrastelemente (8.1, 8.2, 8.3, 8.4) in Eingriff bringbare Rastelemente (12.1, 12.2, 12.3, 12.4) aufweist.

9. Dübelelement nach einem der Ansprüche 1 bis 8, **dadurch gekennzeichnet, dass** die Dübelelemente (1, 1.1, 1.2) und/oder das Kragenelement (11) aus einem Kunststoffmaterial gefertigt sind.

## Claims

1. Sleeve-shaped dowel element having an end region (2), an inserting side (3) and a hollow chamber (4) for accommodating the components of a hardening mass serving to anchor a fastening element, wherein a plurality of dowel elements (1) may be linked to a dowel body (21), **characterised in that** arranged at the end region (2) are spring-loaded centring elements (6) which are prestressed in the direction of the dowel element axis (A), in order to centre a fastening element at a plurality of regions along the fixing-in depth of the dowel body.

2. Dowel element according to claim 1, **characterised in that** the centring elements (6) are designed as lamellar tongues (9).

3. Dowel element according to claim 1 or 2, **characterised in that** the centring elements (6) are arranged at the periphery of the end region (2) of the dowel element (1).

4. Dowel element according to one of the claims 1 to 3, **characterised in that**, in the outflow direction (AR) of the mass, the centring elements (6) have a further spring excursion as the spring excursion in the return flow direction of the mass for mutual blocking of the centring elements (6) in the return flow direction of the mass.

5. Dowel element according to one of the claims 1 to 4, **characterised in that** the dowel element (1) has at its end region (2) latching elements (7.1, 7.2, 7.3, 7.4) and at its opposing inserting side (3), counterlatching elements (8.1, 8.2, 8.3, 8.4) which can be brought into engagement with these latching elements (7.1, 7.2, 7.3, 7.4).

6. Dowel element according to one of the claims 1 to 5, **characterised in that** a collar element (11) can be mounted on the inserting side (3) of the dowel element (1), whereby arranged on this collar element (11) are spring-loaded centring elements (15) which are prestressed in the direction of the dowel element axis (A).

7. Dowel element according to claim 6, **characterised in that** the centring elements (15) of the collar element (11) are designed as lamellar tongues and are optionally evenly arranged at the periphery of the collar element (11).

8. Dowel element according to claim 6 or 7, **characterised in that** the collar element (11) has at its periphery latching elements (12.1, 12.2, 12.3, 12.4) which can be brought into engagement with counterlatching elements (8.1, 8.2, 8.3, 8.4) arranged at the inserting side (3) of the dowel element (1).

9. Dowel element according to one of the claims 1 to 8, **characterised in that** the dowel elements (1, 1.1, 1.2) and/or the collar element (11) are made from a plastics material.

## Revendications

1. Élément de cheville en forme de manchon comprenant une zone d'extrémité (2), un côté d'insertion (3) et une cavité (4) pour recevoir les composants d'un produit en cours de durcissement servant à l'ancrage d'un élément de fixation, plusieurs éléments de cheville (1) pouvant être reliés pour former un corps de cheville (21), **caractérisé en ce que** dans la zone d'extrémité (2) sont disposés des éléments de centrage (6) sollicités élastiquement et précontraints en direction de l'axe (A) de l'élément de cheville afin de centrer un élément de fixation au niveau de plusieurs zones le long de la profondeur d'engagement du corps de cheville.

2. Élément de cheville selon la revendication 1, **caractérisé en ce que** les éléments de centrage (6) sont conformés en languettes lamelliformes (9).

3. Élément de cheville selon la revendication 1 ou 2, **caractérisé en ce que** les éléments de centrage (6) sont disposés à la périphérie de la zone d'extrémité (2) de l'élément de cheville (1).

4. Élément de cheville selon une des revendications 1 à 3, **caractérisé en ce que** les éléments de centrage (6) possèdent une course élastique plus grande dans la direction d'écoulement (AR) du produit que dans la direction de reflux du produit afin de bloquer mutuellement les éléments de centrage (6) dans la direction de reflux du produit.

5. Élément de cheville selon une des revendications 1 à 4, **caractérisé en ce que** l'élément de cheville (1) comporte, dans sa zone d'extrémité (2), des éléments d'encliquetage (7.1, 7.2, 7.3, 7.4) et, dans son côté d'insertion (3) situé à l'opposé, des éléments d'encliquetage antagonistes (8.1, 8.2, 8.3, 8.4) pouvant être amenés en prise avec ces éléments d'encliquetage (7.1, 7.2, 7.3, 7.4).

6. Élément de cheville selon une des revendications 1 à 5, **caractérisé en ce que** sur le côté d'insertion (3) de l'élément de cheville (1) peut être rapporté un élément de collet (11), sur cet élément de collet (11) étant disposés des éléments de centrage (15) sollicités élastiquement et précontraints en direction de l'axe (A) de l'élément de cheville.

7. Élément de cheville selon la revendication 6, **caractérisé en ce que** les éléments de centrage (15) de l'élément de collet (11) sont conformés en languettes lamelliformes et, optionnellement, sont disposés à intervalles réguliers sur la périphérie de l'élément de collet (11).

8. Élément de cheville selon la revendication 6 ou 7, **caractérisé en ce que** l'élément de collet (11) comporte, sur sa périphérie, des éléments d'encliquetage (12.1, 12.2, 12.3, 12.4) pouvant être amenés en prise avec des éléments d'encliquetage antagonistes (8.1, 8.2, 8.3, 8.4) disposés sur le côté d'insertion (3) de l'élément de cheville (1).

9. Élément de cheville selon une des revendications 1 à 8, **caractérisé en ce que** les éléments de cheville (1, 1.1, 1.2) et/ou l'élément de collet (11) sont réalisés en matière plastique.
